# EUROPEAN PATENT SPECIFICATION

(11) **EP 3 204 837 B1**
(45) Date of publication and mention of the grant of the patent: **28.11.2018**
(21) Application number: 15771949.3
(22) Date of filing: 30.09.2015
(51) Int. Cl.: G06F 3/01

(54) **DOCKING SYSTEM**
ANDOCKSYSTEM
SYSTÈME DE CONNEXION

(30) Priority: 06.10.2014 EP 14187768
(43) Date of publication of application: 16.08.2017
(73) Proprietor: Koninklijke Philips N.V., 5656 AE Eindhoven (NL)
(72) Inventor: DEES, Walter, NL-5656 AE Eindhoven (NL); TIBERI, Luca, NL-5656 AE Eindhoven (NL); SHRUBSOLE, Paul Anthony, NL-5656 AE Eindhoven (NL)
(74) Representative: Coops, Peter
(86) International application number: PCT/EP2015/072496
(87) International publication number: WO 2016/055317

(56) References cited:
- WO-A1-2012/117306
- WO-A1-2013/101044
- WO-A1-2014/085231
- US-A1- 2013 241 805
- FANGMIN SHI ET AL: "A New Gaze-Based Interface for Environmental Control", 22 July 2007 (2007-07-22), UNIVERSAL ACCESS IN HUMAN-COMPUTER INTERACTION. AMBIENT INTERACTION; [LECTURE NOTES IN COMPUTER SCIENCE], SPRINGER BERLIN HEIDELBERG, BERLIN, HEIDELBERG, PAGE(S) 996 - 1005, XP019063354, ISBN: 978-3-540-73280-8 paragraphs [0003], [04.1]

## Description

### FIELD OF THE INVENTION

The invention relates to a docking system comprising at least one host arranged for wireless docking with a dockee and multiple peripherals coupled to the at least one host. The host may have one or more built in peripherals, and/or may be arranged for coupling to at least one external peripheral. Upon docking the host may provide access to a respective peripheral for the dockee.

The invention further relates to a dockee, to a host, a host method, a dockee method, and a computer program product for docking between a host and a dockee.

The invention relates to the field of wireless communication, e.g. via Wi-Fi, and more specific to docking of a head wearable device to a host for accessing one or more peripherals. In this context peripherals may be external devices like a display, keyboard, or mouse, or peripherals built in a host like a loudspeaker or storage unit. For example, a TV may be also a host, i.e. the host is built in the TV and constitutes a host that may provide access to multiple peripherals. Accessing and/or using such peripherals and/or any other internal or external resources of the host may be called a service provided by the host.

### BACKGROUND OF THE INVENTION

Wireless docking enables a mobile device (also called a dockee) to access a set of peripherals (such as a mouse, display, machine tool, etc) locally attached through a wire or wirelessly connected to a host device (also called a wireless docking station) through a set of general message exchange protocols over a wireless link (e.g. based on using Wi-Fi as described in IEEE802.11). A host coupled together with one or more wired or wireless peripherals may be called a wireless docking environment.

Wireless docking is known, for example, from WO 2012/117306A1. A wireless docking station may enable a wireless secured communication between at least one dockee and a host. The wireless docking host may provide information about its presence through a Wi-Fi beacon that dockees can use to select and initiate connections with a chosen host.

WO2014/085231 discloses a docking method in a wireless docking system comprising a host, a dockee and multiple peripherals. The method includes sending a request to a wireless docking host to select one or more peripheral functions available via the wireless docking host in accordance with authentication and association information associated with a docking session with the wireless docking host. The method further includes sending a request to the wireless docking host to establish one or more payload connections with the wireless docking host, wherein the one or more payload connections are configured to communicate data via the wireless docking host for the selected one or more peripheral functions. The method comprises storing information associated with the one or more peripheral functions in association with the persistent wireless docking environment to persist after the docking session; and making the information available to be applied in establishing subsequent docking sessions between the wireless device and the wireless docking host.

### SUMMARY OF THE INVENTION

The invention is as set out in the independent claims.

In various complex operating environments (e.g. operating theatre, air traffic control, finance, software development, etc.), a user may have access to various peripherals. In this document the word peripheral includes any physical device that is coupled to a host and provides functionality for a user such as input or output of information, interaction or control, e.g. displays or interactive tools. Examples of such functionality include:
- select which information sources are displayed at a given time;
- zoom into a certain area of a display;
- show additional information;
- switch some peripheral devices on/off;
- create annotations;
- send/receive messages;
- communicate with other people (e.g. video chat).

The user may want to interact with a selected subset of the peripherals. For example, the user may be provided with relevant information by multiple, different devices (e.g. multiple monitors, control panels etc.). In order to perform a certain task, the user may need to have some form of control of and interaction with one or more selected peripherals.

The user may have a wireless device and may select a peripheral or service from a list of available peripherals and may try to connect with it to interact with the peripheral. Making such a selection and connection takes time and effort, and requires user actions. Also the user (e.g. surgeon in operating theatre) may be engaged with other tasks that will occupy his hands. It would be cumbersome if the user would need to use a mouse or keyboard for control or interaction of these devices.

Moreover, since the range of Wi-Fi signals can reach tens of meters, quite a number of devices offering Wi-Fi services may be discovered within Wi-Fi range. The user may be involved in selecting the correct device/service to connect to. However, from a list of devices/services presented to the user it may not be very clear which entry corresponds to which device.

It is an object of the invention to provide a system for wireless docking that enables selecting a peripheral for use while reducing the amount of user interaction and time needed.

For this purpose, according to a first aspect of the invention, in the docking system as described in the opening paragraph the host comprises a host processor arranged for
- transmitting peripheral messages, each peripheral message comprising peripheral data indicative of the availability of services of at least one peripheral,
- docking with the dockee,
- receiving a selection message indicative of a selected peripheral, and
- providing access to the selected peripheral for the dockee,
the dockee being a head wearable device arranged for wireless docking , and
the head wearable device comprising
- a camera for capturing an image of an operating environment comprising the peripherals, and
- a dockee processor arranged for
   - receiving the peripheral messages,
   - processing the image for identifying the peripherals,
   - detecting, via the head wearable device, a focus position in the operating environment based on a viewing direction of a wearer,
   - selecting a peripheral out of the identified peripherals using the focus position,
   - determining a selected host by determining the host that provides access to the selected peripheral in dependence on the received peripheral messages, and
   - docking to the selected host,
   - sending a selection message indicative of the selected peripheral, and
   - accessing the selected peripheral and using the services of the selected peripheral.

For this purpose a head wearable device for use in the above system comprises
- a camera for capturing an image of an operating environment comprising the peripherals,
- a dockee processor arranged for
   - receiving the peripheral messages,
   - processing the image for identifying the peripherals,
   - detecting, via the head wearable device, a focus position in the operating environment based on a viewing direction of a wearer,
   - selecting a peripheral out of the identified peripherals based on the focus position,
   - determining a selected host by determining the host that provides access to the selected peripheral in dependence on the received peripheral messages, and
   - docking to the selected host,
   - sending a selection message indicative of the selected peripheral, and
   - accessing the selected peripheral and using the services of the selected peripheral.

For this purpose a host device for use in the above system is arranged for wireless docking with the head wearable device acting as a dockee and for providing access to at least one of the peripherals for the head wearable device, the host comprising a host processor arranged for
- transmitting peripheral messages, each peripheral message comprising peripheral data indicative of the availability of services of at least one peripheral,
- docking the head wearable device as the dockee,
- receiving a selection message indicative of the selected peripheral, and
- providing access to the selected peripheral for the dockee.

For this purpose, a dockee method of docking is provided for use in a head wearable device as dockee in the above system, the method comprising
- receiving the peripheral messages,
- processing the image for identifying the peripherals,
- detecting, via the head wearable device, a focus position in the operating environment based on a viewing direction of a wearer,
- selecting a peripheral out of the identified peripherals based on the focus position,
- determining a selected host by determining the host that provides access to the selected peripheral in dependence on the received peripheral messages, and
- docking to the selected host,
- sending a selection message indicative of the selected peripheral, and
- accessing the selected peripheral and using the services of the selected peripheral.

For this purpose, a host method of docking is provided for use in a host in the above system, the host arranged for wireless docking with the head wearable device as a dockee, and for providing access to at least one of the peripherals for the head wearable device, the method comprising
- transmitting peripheral messages, each peripheral message comprising peripheral data indicative of the availability of services of at least one peripheral,
- providing an active visual marker displayed on a display of the peripheral,
- docking the head wearable device as the dockee,
- receiving a selection message indicative of the selected peripheral, and
- providing access to the selected peripheral for the dockee.

The measures have the effect that docking is achieved as follows. A head wearable device is proposed for use in the system for selecting a respective peripheral to be used. The multiple peripherals are present in an operating environment. Docking means actually providing selected peripherals as additional I/O peripherals to operate the dockee, in this case the head wearable device or a phone coupled to the head wearable device. For example an input peripheral device, such as mouse or keyboard, would actually operate as input device for the wearable device. If there are many peripheral devices in the operating environment, selection is made by looking at the device to enable the dockee to intelligently and automatically connect to the selected peripheral amongst the plurality of available peripheral devices.

In the host, the host processor is arranged for transmitting a peripheral message, the peripheral message identifying the host and comprising peripheral data indicative of the availability of the at least one peripheral, for enabling the head wearable device, upon receiving the peripheral message, to determine the selected host that provides access to the selected peripheral. The peripheral message transfers the peripheral data to any dockee in wireless transmission range, and informs the head wearable device of the available peripheral.

The head wearable device has a camera for capturing an image of the peripherals in the operating environment, and a processor called a dockee processor. The camera is usually directed in the viewing direction of a wearer of the head wearable device, e.g. smart goggles. In operation, the dockee processor detects, via the head wearable device, a focus position of a wearer relative to the operating environment. The focus position may correspond to a center position in a field of view of the wearer looking straight ahead due to an eye of the wearer being in a centered orientation.

The dockee processor is arranged for processing the image for identifying the peripherals. Next, a peripheral is selected out of the peripherals in the image using the focus position, for example by intersecting a line from the camera in the viewing direction with the image of the operating environment. The peripheral as selected is further called the selected peripheral. For a single camera this may not be the middle pixel of the captured image, but may be corrected by the physical position of the camera with respect to the head and eyes. For example intersecting lines may be used for a stereoscopic camera. The peripheral closest to the intersection point is selected.

Next, a selected host is found by determining the host that provides access to the selected peripheral, and, the dockee processor is arranged for docking to the selected host and accessing the selected peripheral. A selection message may be generated when, for example, the wearer has been focusing on a specific peripheral for a minimum amount of time, which ensures that the wearer is focusing on a certain device rather than simply looking around. The host comprises a host processor which, in operation, receives the selection message indicative of the selected peripheral, and subsequently docks the head wearable device as the dockee, and provides access to the selected peripheral. Advantageously, the peripheral to be used or controlled is selected, among multiple available peripherals in an operating environment, by the wearer looking at that peripheral.

The methods according to the invention may be implemented on a computer as a computer implemented method, or in dedicated hardware, or in a combination of both. Executable code for a method according to the invention may be stored on a computer program product. Examples of computer program products include memory devices, optical storage devices, integrated circuits, servers, online software, etc. Preferably, the computer program product comprises non-transitory program code means stored on a computer readable medium for performing a method according to the invention when said program product is executed on a computer. In an embodiment, the computer program comprises computer program code means adapted to perform all the steps of a method according to the invention when the computer program is run on a computer. The computer program may be embodied on a computer readable medium.

Optionally, in the above docking system, at least one peripheral and/or the host processor is arranged for providing an active visual marker displayed on a display of the peripheral, and the dockee processor is arranged for identifying the peripheral by detecting the visual marker in the image. Advantageously, the peripheral dynamically shows the active marker and is identified using the visual marker to distinguish the peripheral from its environment and/or other similar devices in the image.

Optionally, the head wearable device comprises a display unit for displaying an overlay over the operating environment as perceived by the wearer via the head wearable device, and the dockee processor is arranged for generating the overlay and therein visually marking at least one of the peripherals. Advantageously, the wearer is assisted in focusing on a peripheral that is available for docking. Also, the dockee processor may be arranged for said marking by visually prioritizing the peripherals based on distance of the peripherals to the wearer. Prioritizing means that more suitable peripherals are visually made more prominent, e.g. by highlighting or using colours or graphical symbols. Advantageously suitable peripherals are visually distinguished and ranked based on proximity to the wearer. Also, the dockee processor may be arranged for said marking by visually prioritizing the peripherals based on session information of a previous session of the dockee using the peripherals. Advantageously, the wearer may select and continue working with the selected peripheral taking into account prior use in the previous session, for example using the same printer that has been used earlier. Also, the dockee processor may be arranged for said marking by visually prioritizing the peripherals based on a current state of the wearer. Advantageously, the system determines a current state, e.g. sitting or standing, and prioritizes the suitable peripherals based thereon. Also, the dockee processor may be arranged for said marking by visually indicating a peripheral that is available but not visible in the operating environment as peceived by the wearer. For example, a suitable peripheral may be hidden behind other objects or be just outside the field of view, and the system may graphically mark the location by an arrow or a symbol representing the peripheral.

Optionally, in the head wearable device, the dockee processor is arranged for detecting the focus position via the camera by taking a center position in the image as indicative of the viewing direction relative to the operating environment, the focus position corresponding to a center position in a field of view of the wearer looking straight ahead due to an eye of the wearer being in a centered orientation, and selecting the peripheral closest to the focus position. Advantageously the peripheral at or near the focus position is selected based on the focus position as detected in the image.

Optionally, in the head wearable device, the dockee processor is arranged for detecting a gaze direction by detecting an actual orientation of an eye of the wearer and determining an offset of the actual orientation from the centered orientation, and shifting the focus position in dependence of the offset. The focus position may correspond to a center position in a field of view of the wearer looking straight ahead due to an eye of the wearer being in a centered orientation, or may correspond to an off center position due to the eye of the wearer looking at different direction than where the head wearable device is pointing at. This may be detected by an additional inwards facing camera pointed at the eyes of the wearer. Advantageously the focus position is augmented by the actual gaze direction of the wearer, and the peripheral is selected based on the augmented focus position in the image.

Optionally, in the head wearable device, the dockee processor is arranged for detecting a viewing distance from the eye of the wearer to the peripherals, and shifting said focus position in dependence of the viewing distance. Advantageously the focus position is augmented by the actual viewing distance to the peripherals, and the peripheral is selected based on the augmented focus position in the image.

Optionally, in the head wearable device, the dockee processor is arranged for identifying the peripheral in the operating environment by referring to a preconfigured setup, the preconfigured setup defining positions of the multiple peripherals in the operating environment. For example, the docking host may provide an annotated image with which the dockee can compare its current image. Advantageously the peripheral is selected based on a position relative to a known, preconfigured setup of the operating environment as captured in the image.

Optionally, in the head wearable device, the dockee processor is arranged for identifying the peripheral in the operating environment by recognizing the peripheral based on visual properties of the peripheral. For example, the properties may be provided by the docking host, the peripheral itself, or may be fetched from the Internet based on device discovery information. Advantageously the peripheral is detected by using its visual properties like shape, a specific color, brand, or type.

Optionally, in the head wearable device, the dockee processor is arranged for identifying the peripheral by detecting a visual marker in the image. The visual marker may, for example, be a QR code or barcode. Such visual markers are designed for reading by an image processor, and may contain further information on the peripheral. The visual marker may, for example, be a label having a graphical symbol and/or text. Advantageously, such a symbol or text may be detected by an image processor, and clearly identify the respective peripheral.

Optionally, at least one peripheral and/or the host processor is arranged for providing an active visual marker displayed on a display of the peripheral. The visual marker may, for example, be an active visual marker displayed on a display of the peripheral controlled by the peripheral itself. Advantageously, the marker may be created/adapted dynamically by the host to represent the actual service or functions available at the peripheral.

Further preferred embodiments of the device and method according to the invention are given in the appended claims, disclosure of which is incorporated herein by reference.

### BRIEF DESCRIPTION OF THE DRAWINGS

These and other aspects of the invention will be apparent from and elucidated further with reference to the embodiments described by way of example in the following description and with reference to the accompanying drawings, in which
Figure 1 shows a docking system including a head wearable device,
Figure 2 shows an example of an operating environment having a multiple peripherals and a head wearable device,
Figure 3 shows a method of docking for selecting a peripheral at a dockee, and
Figure 4 shows a method of docking at a host.

The figures are purely diagrammatic and not drawn to scale. In the Figures, elements which correspond to elements already described may have the same reference numerals.

### DETAILED DESCRIPTION OF EMBODIMENTS

In this document wireless docking is about enabling a mobile device, called a dockee, to wirelessly connect to a host providing. By wireless docking the host provides services of available peripherals that are built in and/or coupled to the host to the dockee, so that applications on the mobile device can make use of the services of the peripherals to improve the experience and productivity of working/interacting with these applications. A discovery/advertisement of services, and managing the connections to peripherals, may be performed by the host, which makes functionality of the services available through a wireless docking protocol. Possible hosts include (but are not limited to) dedicated wireless docking station devices, display devices, audio devices, printers, PCs. The wireless docking host may also be a small (PC like) dongle with a display, USB and audio interface. Possible peripherals include (but are not limited to) mice, keyboards, display devices, audio devices, webcams, printers, storage devices, USB hubs, network interfaces, machine tools, medical equipment, industrial control panels, etc. These peripherals may be wireless and may support standards such as Wi-Fi Serial Bus and Wi-Fi Miracast to make their functionality available through the wireless network to the host. Wired peripherals may also be connected to the wireless host (e.g. USB, HDMI, DVI, VGA, analogue audio, analogue video, etc). Next to services providing access to peripherals, other services may include e.g. providing remote desktop access or access to certain applications, database access (e.g. document archive), network file system access, access to internet and specific internet services, home network services such as DLNA or UPnP services, etc.

Innovative wearable mobile devices, e.g. smart wearable glasses, are being released in the market. These devices have the advantage of being worn by the wearer rather than carried, and may be operated hands-free by the wearer. Typically head wearable devices have various sensors (e.g. microphones, accelerometers etc.) and actuators (e.g. loudspeaker, display etc.) on board, and usually also a camera. Information extracted from these sensors, especially from the camera capturing an image of an operating environment, may be used to derive information about the position and focus of the wearer, e.g. the gaze direction. In the operating environment various peripherals may be present, for example in a well-defined and structured environment like an operating theatre or industrial control centre. A respective peripheral to be used may now be selected via the head wearable device. The camera may further be used to identify visible markers (e.g. QR codes) or object properties by processing the image, as the outward camera in the smart goggles points at the same direction where the wearer is focusing.

Typically, the head wearable device and the host device each comprise a microprocessor which executes appropriate software stored at the device; for example, that software may have been downloaded and/or stored in a corresponding memory, e.g., a volatile memory such as RAM or a non-volatile memory such as Flash (not shown). The devices may also be equipped with microprocessors and memories (not shown). Alternatively, the devices may, in whole or in part, be implemented in programmable logic, e.g., as field-programmable gate array (FPGA). Dockee and host devices may be implemented, in whole or in part, as a so-called application-specific integrated circuit (ASIC), i.e. an integrated circuit (IC) customized for their particular use.

Also, the functions and units as described below may be implemented at least partly in hardware circuits, which may include a processor circuit and storage circuit, the processor circuit executing instructions represented electronically in the storage circuits.

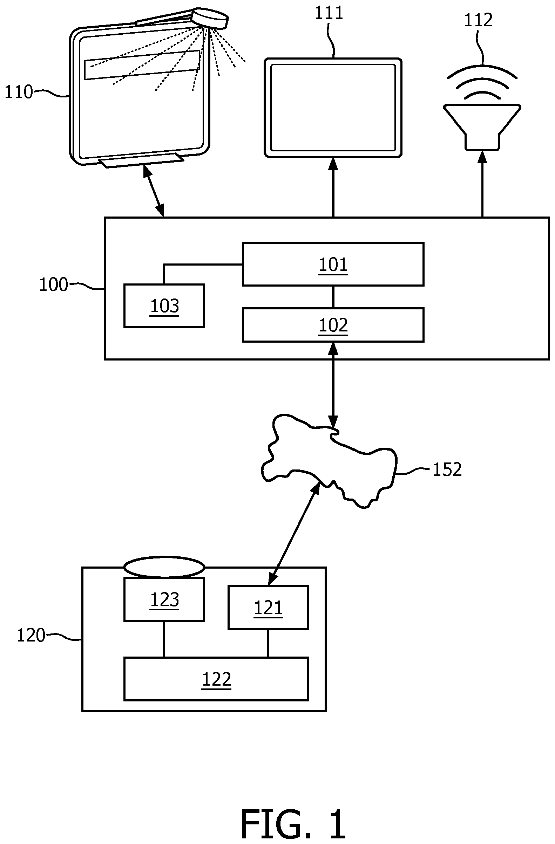

Figure 1 shows a docking system including a head wearable device. The system includes a host device 100 for wireless communication with one or more dockees 120, for example a head wearable device. The host device is coupled to a number of peripherals 110,111,112 to provide services, e.g. rendering audio or video (AV) data. It is noted that in this document AV data is used for any type of video data, audio data or a combination of video and audio data. The peripherals may include video output devices like a beamer or a display 111, graphical input/output devices like a smartboard 110 or a touch screen, audio output devices like a loudspeaker system 112 or a headphone, user input devices like a mouse or a room control unit; data processing devices like a data storage unit or a printer. In a practical environment there may be multiple hosts, which are coupled to further peripherals.

The host device 100 has a host communication unit 102 for accommodating wireless communication 152, for example a Wi-Fi unit, well known as such. The host device further has a host processor 101 arranged for docking at least one dockee. The process of docking a wireless device to a wireless docking host (WDH) is a process of establishing a data link via the available radio channel such as Wi-Fi or Bluetooth, and is known as such as discussed above with reference to WO 2012/117306A1. A description of Bluetooth can be found, for example, in Bluetooth Specification, Core Package version 2.1 + EDR, issued: 26 July 2007. The docking process involves providing access to one or more peripherals for the dockee. The host may have a peripheral control unit 103 for controlling the configuration and services available via the peripherals.

The dockee 120 has a dockee communication unit 121 for accommodating said wireless communication with the host. In practice, there may be multiple communication units for that purpose, for example Bluetooth ,Wi-Fi and 60GHz (e.g. WiGig). The dockee further has a dockee processor 122 arranged for docking with the host device for, as a dockee, getting access to the at least one service.

One of the ways to make wireless connectivity simpler for the user is wireless docking. In wireless docking, a so called wireless docking host makes a number of services available to a mobile device, with which the mobile device can setup communication in one go. Any group of peripheral devices and/or services made available by a wireless docking host is called a wireless docking environment. A wireless docking environment may contain a single host and multiple peripherals, or a wireless docking host may accommodate a number of (different) wireless docking environments. A wireless docking host may also make its services available by individual selection of each one. There may also be a number of wireless docking hosts in reach of a mobile device to dock with.

Another way to make it more convenient for the user to use a mobile device is that a peripheral device, e.g. a monitor or a TV, makes it function, its screen, available wirelessly to mobile devices. It can of course frequently happen that there are several of these wireless peripheral devices in wireless reach of a mobile device. Miracast, which is certified by the Wi-Fi Alliance, is a technology with which this is possible. In the current document, any device in combination with peripherals providing functionality to provide access to the peripheral input and/or output functions is called a host.

Traditionally the above mentioned devices may employ Wi-Fi communication to make their wireless docking environment or their function wirelessly available, e.g. by using Wi-Fi Direct. Setting up a Wi-Fi connection requires quite some steps to be taken and the exchange of a number of messages before the two devices are 'associated' over Wi-Fi. This may require quite some user involvement to make sure that the correct devices are going to be connected and takes time during which the user has to wait for the connection to be set up and started. When two devices are associated over Wi-Fi, their Wi-Fi connection is protected cryptographically and an IP connection is established.

Wi-Fi devices can make themselves discoverable wirelessly. This can be done before two devices are associated, so this is called pre-association discovery. There are several types of pre-association discovery. One is pre-association device discovery, whereby a device and some properties of the devices like its name, function, etc. can be discovered. This may be done through beacon frames and probe request frames and probe response frames, well known from IEEE 802.11. Another type is pre-association service discovery, with which the services, e.g. printing, display, etc., offered by a Wi-Fi device can be discovered through IEEE 802.11u Generic Advertisement Service (GAS) frames by others. Such discovery may include information about wireless docking environments being offered for wireless docking.

Since the range of Wi-Fi signals can reach tens of meters, quite a number of devices offering Wi-Fi services may be discovered within Wi-Fi range. The user needs to be involved in selecting the correct device/service to connect to. However, from the list of devices/services presented to the user it may not be very clear which name corresponds to which device. For example, a user is interested in showing content residing in his mobile MP4 player on a large display. Miracast is the commercial name of the Wi-Fi Alliance for a service that displays video received over Wi-Fi. There may be several displays in the user's vicinity that offer the service of rendering video received over Wi-Fi. This can be the case in a modern office building, with many meeting rooms and flexible workplaces equipped with Miracast enabled displays, but also in a home situation, where a home is equipped with several TVs that offer this Wi-Fi service. Such an environment having multiple peripherals is further called an operating environment in this document.

In Figure 1 the docking system has at least one host, multiple peripherals and a head wearable device as dockee. The head wearable device has a camera 123, e.g. a head-mounted display with a forward looking camera. When the head wearable device is worn by a wearer, the wearer may want to interact with one of the peripherals, and will be looking in the direction of the operating environment where the peripherals are present.

The host 100 is arranged for wireless docking with the head wearable device as a dockee. Upon docking, the host will provide access to at least one of the peripherals for the head wearable device. The head wearable device 120 is arranged for wireless docking as a dockee of the host for accessing at least one of the peripherals. The camera 123 on the head wearable device is arranged for capturing an image of the operating environment, when the wearer is looking in the direction of the peripherals.

The head wearable device 120 has the dockee processor 122 for detecting a viewing direction of a wearer relative to the operating environment. As the camera for capturing the image is coupled to the head wearable device in a known way, the dockee processor is enabled to perform said detecting via the head wearable device. As the orientation of the head wearable device and its camera are known during actually wearing the head wearable device, the dockee processor may assume that the wearer is focused on a focus point near the center of the captured image. Further embodiment of determining the viewing direction and focus point are discussed later.

The dockee processor is further arranged for processing the image for identifying the peripherals. As the peripherals are present in the operating environment at which the wearer is looking, one or more peripherals may be recognized and identified. The dockee processor is further arranged for selecting a peripheral out of the peripherals in the image based on the viewing direction. Various options for identifying the peripherals and selecting one of them are discussed below.

The dockee processor is further arranged for determining a selected host by determining the host that provides access to the selected peripheral. There may be several host devices within range of the wireless communication. For example, an exchange of protocol messages or information on a preconfigured operating environment may be used to determine the selected host coupled to the selected peripheral. Finally, the dockee processor is further arranged for docking to the selected host and accessing the selected peripheral.

The host processor 101 is arranged for receiving a selection message indicative of the selected peripheral, docking the head wearable device as the dockee, and providing access to the selected peripheral.

Optionally, at least one peripheral is arranged for providing a visual marker, for example a label or QR code. The dockee processor may further be arranged for identifying the peripheral by detecting the visual marker in the image.

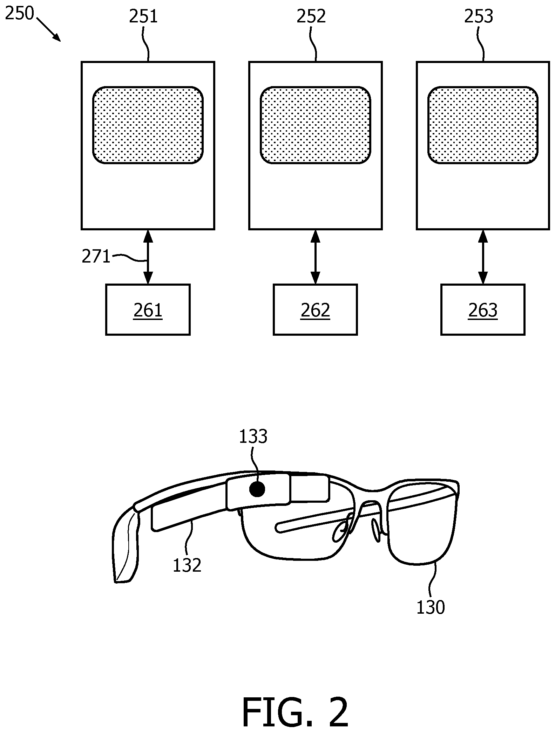

Figure 2 shows an example of an operating environment having a multiple peripherals and a head wearable device. The operating environment 250 in the figure shows several host devices 261,262,263 connected to multiple peripherals, for example displays 251,252,253. There may be further peripherals like a projection screen, machine tools, control panels, medical equipment, etc. The head wearable device 130 is shown as smart glasses being provided with a camera 133 and a compartment 132 for electronic circuitry like a dockee processor and wireless communication unit, similar to Figure 1 above. It is assumed that, in use, the head wearable device is worn by a wearer (not shown) who is looking at the peripheral he wants to use.

The head wearable device may have a display unit for displaying an overlay over the operating environment as perceived by the wearer via the head wearable device. The display unit is not shown as such but may be integrated in the compartment 132 and is positioned so that the displayed overlay is perceived in combination with the real world view via the glasses. Providing such an overlay over the real world view of the wearer may be called augmented reality. The dockee processor may be arranged for generating the overlay. For example, the actual focus position and/or selected peripheral device may be visually indicated in the overlay by an arrow, highlighted window or graphical symbol. The dockee processor may be arranged for, in the overlay, visually marking at least one of the peripherals. Various examples are described now.

Optionally, the dockee processor is arranged for said marking by visually prioritizing the peripherals based on distance of the peripherals to the wearer, so called proximity-based prioritization of dockable devices within the user's field of view. When a user, wearing the augmented smart glasses, wishes to find a dockable device, available devices are visually prioritized in the augmented overlay based on their current distance to the wearer. For example, devices within arm's reach may be presented with the most visual attention. In an open office environment, there may be many devices that can act as a peripheral for the dockee, but only a few may be directly available or suitable for interaction with the wearer. Distance or proximity detection to a peripheral can for example be performed via the camera in the smart glasses using object recognition and perspective correction, or using the camera image and a signal strength measure such as an RSSI value emitted from the dockable peripheral.

Optionally, the dockee processor is arranged for said marking by visually prioritizing the peripherals based on session information of a previous session of the dockee using the peripherals. This may be called session-oriented prioritization of dockable devices within a user's field of view. When a user has previously interacted with a dockable device, both the session information previously related to that device (such as a call list) and/or the performance of the device/user from the last docked session (e.g. typing speed) may be used as input parameters to determine a priority for potential docking with that peripheral. This information is used to prioritize a dockable device in the augmented overlay, e.g. using size, transparency, color, text to signify priority. The session information can either be stored in the dockable device for secure retrieval (e.g. to continue where the user left off), or could be stored on another device, for example in the host. The performance related history information from prior session can also be stored on the head wearable device, the peripheral device or on the cloud.

During prioritizing, when a dockable peripheral device that supports multi-session interaction is available, the visual priority level may be based on the available resources that are remaining on that device, e.g. remaining memory, CPU cycles, printing queue, etc.

Optionally, the dockee processor is arranged for said marking by visually prioritizing the peripherals based on a current state of the wearer. This may be called prioritization of dockable devices in relation to user's current state. Now devices are visually prioritized in the augmented overlay based on their level of support for the user's current state. For example, when a smart glass wearer would like to give a presentation in a meeting whilst seated, the system will search for peripheral devices for this session that are available and appropriate for the wearers state, e.g. to dock with an input device and a local display at the table where the wearer is seated. However, when the wearer is standing, the input device selection within the augmented smart glass overlay is shown with a different priority level and another device takes a higher priority, e.g. a camera for gesture recognition. In practice wearer state detection can be performed by the smart glass device using various sensor, e.g. an accelerometer, pressure sensor (for altitude), gyroscope (for head orientation), camera (for distance from glass to desk to infer sitting). Detection can also be performed remotely via a potential dockee if it has sensing capabilities and is currently not being utilized. E.g. if the dockee has a camera, it can remotely infer the state of the user to determine its appropriateness for docking based on the user's current state/activity. If the smart glass is in discovery mode, potential dockees can aid in the priority-level determination process by temporarily offering some of their functions to determine context.

Optionally, the dockee processor is arranged for said marking by visually indicating a peripheral that is available but not visible in the operating environment as perceived by the wearer. Now the user's attention may be alerted to dockable peripheral devices outside of their field of view. For example, when a high priority dockable peripheral device is available outside of the user's field of view and the user is looking for such a device, a symbol may be shown near the actual position of the device but inside the wearer's field of view. Also, a motor on the left or right side of the smart glasses may be actuated to indicate that the user should look further around to the left or right. Alternatively or additionally, the augmented overlay may indicate an arrow, with the size / color of the arrow indicated the level of priority of the dockable device.

The connection between a respective host and individual peripherals is not known to the head wearable device 130 or its wearer. To resolve this issue, the dockee processor in the head wearable device is arranged for detecting a viewing direction of a wearer relative to the operating environment, processing the image for identifying the peripherals, selecting a peripheral out of the peripherals in the image based on the viewing direction, determining a selected host by determining the host that provides access to the selected peripheral. Subsequently docking to the selected host and accessing the selected peripheral may be performed.

Optionally, the dockee processor is arranged for detecting the focus position via the camera by taking a center position in the image as indicative of the viewing direction relative to the operating environment. The focus position corresponds to a center position in a field of view of the wearer looking straight ahead due to an eye of the wearer being in a centered orientation. The dockee processor is further arranged for selecting the peripheral nearest to the focus position.

Optionally, the dockee processor is arranged for detecting a gaze direction by detecting an actual orientation of an eye of the wearer and determining an offset of the actual orientation from the centered orientation. As such tracking the actual orientation of the eye to determine the viewing direction is known. Subsequently, the focus position is shifted in dependence of the offset. The dockee processor may be arranged for detecting a viewing distance from the eye of the wearer to the peripherals, and shifting said focus position in dependence of the viewing distance. For example the distance may be determined using an auto-focus camera with the ability for the wearer to adapt the auto focus point by interacting with the head wearable device. Furthermore a distance range may be used to select only those peripherals that don't exceed a certain distance from the wearers eye. Alternatively distance may be detected by using e.g. Wi-Fi based distance measurements using e.g. IEEE Fine Time Measurement (FTM).

Optionally, the dockee processor is arranged for identifying the peripheral in the operating environment by referring to a preconfigured setup. The preconfigured setup may define positions of the multiple peripherals in the operating environment, e.g. mutual distance and positions of multiple displays or control panels. The preconfigured setup may be known to the head wearable device, e.g. stored during a configuration session. Alternatively, the preconfigured setup may be stored and maintained by at least one host, e.g. in the peripheral control unit 103 shown in Figure 1. The hosts may be enabled to communicate with each other to exchange configuration information, and provide information about each other's peripherals in pre-association discovery messages.

Optionally, the dockee processor is arranged for identifying the peripheral in the operating environment by recognizing the peripheral based on visual properties of the peripheral. For example, image recognition known as such may be used to identify the peripheral by using a known image or model of such a peripheral and match the model to the image.

Optionally, the dockee processor is arranged for identifying the peripheral by detecting a visual marker in the image. For example, the visual marker may be a QR code or barcode, which enable reading an amount of data stored in such code by a dockee processor. The visual marker may also be a label having a graphical symbol and/or text, or an active visual marker displayed on a display of the peripheral.

The above system enables selecting a specific device out of a plurality of peripherals in a rich information context via the usage of a smart wearable device (e.g. smart goggles) and automatically docking the head wearable device to the selected peripheral via a host coupled to the peripheral. The docking may further be extended to include an associated device such as smartphone or tablet associated to the head wearable device. The selection may be performed by looking at the device to be selected by the wearer of the head wearable device (e.g. smart goggles) having a camera. The head wearable device may process a captured image to identify the focus position at which the wearer is looking, and then identify the device closest to that position. For example finding the focus position may involve gaze direction detection via a 3D gyroscope and accelerometer on the head wearable device. For example the identifying may involve one or more of the following: visual marker detection, shape recognition, brand or label detection.

In a preferred embodiment, the system may include a smart goggles or head-mounted display with an outward looking camera worn by a wearer, e.g. a surgeon in operatory theatre. The head wearable device may be a standalone device or work in conjunction with an associated smartphone or tablet. We refer to the standalone head wearable device or the combination with a smartphone/tablet as being the dockee. The host may be a standalone wireless docking station with a plurality of peripheral devices connected to it, e.g. multiple display devices on which visual information will be displayed, such as vital signs monitors, laparoscopic camera display, etc.

For example, if the peripheral devices are display devices and docking has been successful, information may be displayed on these peripheral devices as provided by the dockee, e.g. in the form of Miracast output data whereby the dockee is a Miracast source and the peripheral device a Miracast sink. The visual information may also be provided under the control of the dockee by a server on the network/Internet, e.g. HTML pages or other information sources being displayed.

The dockee may be docked to all peripheral devices connected to a host, to a subgroup of those, or to an individual peripheral device. The process of docking may involve:
1) discovery of wireless docking hosts, and for respective hosts information on connected peripheral devices,
2) setting up a wireless link between the dockee and the wireless docking host,
3) selecting which peripherals to use from the plurality of peripheral devices connected to the wireless docking host using a set of messages,
4) setting up a session between the dockee and the selected peripheral devices for control/interaction purposes, using a peripheral specific messaging protocol (such as Miracast, Wi-Fi Serial Bus, WiGig Display Extension).

In a possible embodiment, the peripheral devices have a visual marker for univocal identification (e.g. QR code sticker, barcode, LED with coded light, etc.) that can be decoded by the camera or different sensor of the head wearable device. The visual marker may be static (e.g. sticker which displays a unique identifier and can be recognized by the camera of the wearable device) or dynamic (e.g. dynamically generated QR code displayed on the corner of a display device, with a unique device identifier encoded as part of the QR code).

The host and connected peripheral devices may be configured in such a way that the relations between the peripheral devices and the visual markers are known. The configuration may be stored for example in the host, e.g. as part of a wireless docking environment data structure, or on a server device in a network to which the dockee is connected. The host or network server device may offer a query interface for retrieving the stored configuration information. The host may also offer the stored configuration information during pre-association discovery information exchange with the wireless dockee, using a beacon frame, probe response or GAS frame). Alternatively, the configuration data may be distributed amongst each of the connected peripherals. If such peripheral device supports Wi-Fi, the peripheral device may offer a query interface for retrieving stored configuration data or offer this data during pre-association discovery using existing or new Information Elements added to P2P pre-association device discovery or offer this data in GAS query response messages.

In an embodiment of the head wearable device, once a visual marker is detected within the image coming from the outward camera of the wearable device, information about or extracted from the marker is used to retrieve information about the peripheral device from the earlier stored configuration information. The configuration may be retrieved by connecting to the host, by sending a query to a server in a network, by parsing pre-association discovery information sent by a wireless docking host using a beacon frame, probe response or GAS frame. The configuration information is then used to determine the peripheral device for docking and set up a session between the dockee and the selected peripheral device.

In an embodiment, sessions are set up to peripheral devices that the wearer is currently focusing on. Alternatively, sessions may be set up to peripheral devices that are currently in the wearer's field of vision. In yet another embodiment, sessions are set up only to the peripheral devices that the wearer has looked at since the start of the docking session. In a further embodiment, retrieved information for the peripheral device (e.g. friendly device name, device type, brand, services offered), is shown on the wearable device's display, and may be positioned in such a way that the retrieved information being displayed overlaps with the reflection of light rays coming from peripheral device into one's eyes (i.e. augmented reality).

In an embodiment, the docking of the wearable device to the device happens when the shape of the device is recognized by a dockee processor coupled to the camera of the head wearable device. For example, captured images may be streamed to a separate processor (e.g. computer). The host and connected peripheral devices may be configured such that information about the shape of each of the peripheral device is stored in the host, or on a server in a network to which the wireless dockee is connected. Once a known shape of a device is detected within the image coming from the outward camera of the head wearable device, the shape information is correlated with the stored shape information in the configuration data. After a positive match, detailed information about the peripheral device from the earlier stored configuration information can be retrieved. This information is then used to select the peripheral device for docking and set up a session between the wireless dockee and the selected peripheral device.

In an embodiment also the relative position of the peripheral devices is configured and stored, in order to be able to aid the detection of a peripheral device amongst a multitude of peripheral devices with the same or similar shape. For example display number one is placed above display number two, and to the right of display number three. The selected display is determined in conjunction with a viewing direction detected through the accelerometer and gyroscope of the head wearable device to determine the focus of the wearer. The position may also be configured and stored relative to a particular known reference point, for example relative to the host to which the peripheral devices are connected.

In an embodiment, the selection of the peripheral involves detection of gaze direction of the wearer by the accelerometer and gyroscope of the head wearable device given a fixed location of the wearer, e.g. standing at a particular location near an operating bed in an operating theatre, or a marked position on the floor. This requires an awareness of the environment by the wearable device or by a separate processor (e.g. computer) to which the wearable device sends accelerometric and gyroscopic data in real time. When the gaze direction intersects with a peripheral device's position, detailed information about the peripheral device from the earlier stored configuration information can be retrieved. This information is then used to select the peripheral device for docking and set up a session between the dockee and the selected peripheral device.

In an embodiment, selecting and docking of the head wearable device to the peripheral happens when the brand/label of the peripheral is recognized by the camera of the smart goggles, e.g. through optical character recognition. Possibly the images captured are streamed to a separate processor (e.g. computer). To this end, the wireless docking host and its connected peripheral devices are configured in such a way that information about the brand/type of each of the peripheral device are stored for example in the host. The device's brand/label is correlated with the stored brand/label information in the configuration data. After a positive match, detailed information about the peripheral device can be retrieved. This information is then used to select the peripheral device for docking and set up a session between the wireless dockee and the selected peripheral device.

In an embodiment, when a particular peripheral device has been selected for docking according to one of the aforementioned processes, user input control events can be automatically directed at the selected peripheral device. A docking session may be terminated if the wearer looks away for a period of time, or if another peripheral device has been selected. This enables the wearer control over the particular peripheral device based on this automatic selection mechanism, e.g. to select which information should be shown on the selected peripheral device. The user input control events may be in the form of voice control commands, or gesture control commands detected by the wearable device, or via another system, e.g. a wearable sensor, a general purpose user interface, keyboard/mouse interface, touchpad or touch screen. Note that peripheral devices that are currently not being used may be switched off, depending on the wearer's preferences/configuration.

In an embodiment, the system may retain the docking session or end the docking session at the user command, e.g. end the session when the wearer looks away for a sufficiently long time, through a specific eye movement, via gesture or voice control.

In an embodiment, the head wearable device is used during configuration of the peripheral devices with the host, e.g. correlating a visual marker with a peripheral, which shape do these devices have, which relative position do these devices have amongst each other, which devices become part of one or more subsets of devices. For example the configuration of the operational environment and host may be set up by selectively looking at the peripheral devices that the wearer may use in a sequential manner whilst the host is put in a configuration mode.

In an embodiment, the wearable device has a beamshaping antenna for wireless communication, e.g. Wi-Fi P2P communication using 60GHz IEEE 802.11ad. The antenna may be directed in the same direction as the camera. The head wearable device keeps track of available devices that are discovered within the directed Wi-Fi beam. The head wearable device may use the availability information to limit the search for a matching device using one of the aforementioned processes. The head wearable device may also use the availability information for setting up a connection for available devices that discovered within the directed beam.

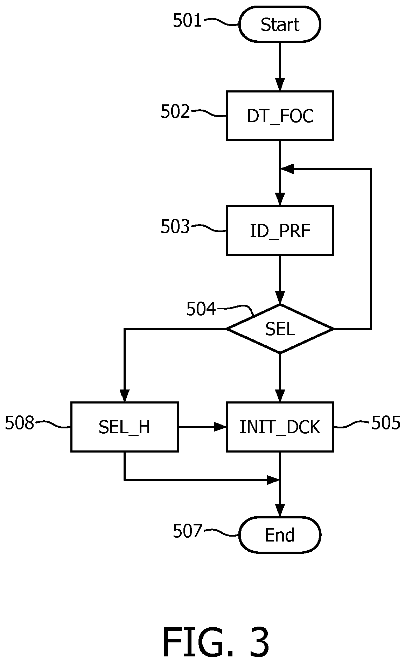

Figure 3 shows a method of docking for selecting a peripheral at a dockee. The dockee method enables wireless communication between a dockee and one or more hosts. The host and the dockee have been elucidated with reference to Figures 1 and 2. The dockee is arranged for wireless docking with the host for accessing a peripheral selected via the camera of head wearable device. The dockee method initially starts at START 501 and is triggered by the user placing the head wearable device on his/her head, i.e. becoming the wearer, and activating the camera for capturing images. Next, at DT_FOC 502, a focus position is detected via the head wearable device. The focus position in the operating environment is based on a viewing direction of a wearer, and corresponds to the location in the operating environment where the wearer has his attention focused. For example, the focus position may be the center of the image of the forward looking camera of the head wearable device. At ID PRF 503 the images as captures are processed for identifying the peripherals. Next, at stage SEL 504, a peripheral is selected out of the peripherals in the image based on the focus position. If the head wearable device already has configuration data on which host is coupled to the identified and selected peripheral, the host is directly selected, and the process continues by docking at stage INIT DCK 505. If the configuration is yet unknown, e.g. when multiple hosts are within range, peripheral information is retrieved in stage SEL_H for determining the host that provides access to the selected peripheral. When the selected host has so been determined, the process continues by docking at stage INIT DCK 505 for docking to the selected host and accessing the selected peripheral. When use of the peripheral is terminated, the method ends at node END 507.

Optionally in a method of docking, the wearable device docks with several docking hosts before the actual detection and selection of peripherals takes place. This may be faster since then the wearable device can avoid association (again) with the host. Also, the docking host may already prepare and reserve all the peripherals for docking with that particular dockee, but only after the "select peripheral" action is done using the wireless docking protocol, the peripheral gets selected and can be operated upon using the peripheral specific messaging protocol.

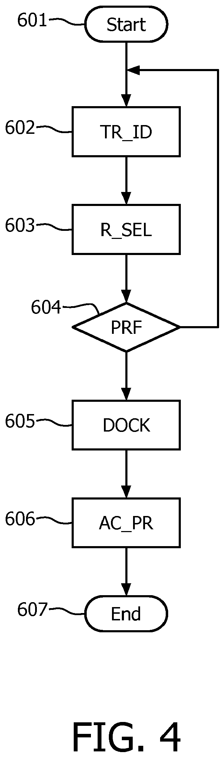

Figure 4 shows a method of docking at a host. The host method enables wireless communication between a host and a head wearable device as dockee. The host and the dockee have been elucidated with reference to Figures 1 and 2. The host is arranged for wireless docking for providing access to a peripheral. The host method initially starts at START 601 and is triggered by powering on the host and peripherals. In a next step TR_ID 602, the host method may involve generating active identifiers, like a QR code, text, or barcode, and displaying the identifiers on the corresponding peripherals. Also, the host may transmit peripheral configuration data so as to announce the availability, and or other properties, of the peripherals. Next, in a stage R_SEL 603, the host may receive a selection message indicative of the selected peripheral. In stage PRF 604, the host determines whether the selected peripheral is connected. If not, the method continues at stage TR_ID 602. If the peripheral is available and coupled to the host, the method continues at stage DOCK 605, by docking the head wearable device as the dockee. Finally, at stage AC_PR 606, the host provides access to the selected peripheral. If the session is discontinued, the method terminates at node END 607.

In practice the methods may be implemented in host software (host method) and dockee software (dockee method), e.g. a so-called app. Such computer program products are for wireless docking between a host and a dockee, and comprise a program operative to cause a processor to perform the host or dockee method. So the invention may be implemented in hardware and/or software using programmable components.

Although the invention has been mainly explained by embodiments using wireless docking and separate peripherals, the invention is also suitable for any wireless system where a head wearable device (having the dockee role) wants to connect to a further wireless devices (having the host role) to get access to, or share, one or more peripherals or services. So the host may be any control unit that performs the host role, and may be integrated in some other device and need not be visible for the wearer. The peripherals include all devices intended to being physically used by the wearer for control or interaction.

The peripheral may also be (part of) a physical docking system or docking station. The peripheral may also contain further peripherals. For example, a peripheral may be a device provided with one or more LEDs or a LED strip and have further connectors to attach one or more further peripherals. A docking station may be a frame in which one or more displays may be positioned, each display being a further respective peripheral. The frame may, for example, accommodate 2x2 displays, while different LED signals may be used to indicate which position is available or intended for docking. The docking station may activate the respective LED signal and the host may inform the dockee of the respective position and corresponding LED signal. In the image the docking station is identified first, while subsequently a connection is made to one or more of the peripherals offered by the host, e.g. one of said displays in the frame based on additional data provided by the host.

It will be appreciated that the above description for clarity has described embodiments of the invention with reference to different functional units and processors. However, it will be apparent that any suitable distribution of functionality between different functional units or processors may be used without deviating from the invention. For example, functionality illustrated to be performed by separate units, processors or controllers may be performed by the same processor or controllers. Hence, references to specific functional units are only to be seen as references to suitable means for providing the described functionality rather than indicative of a strict logical or physical structure or organization. The invention may be implemented in any suitable form including hardware, software, firmware or any combination of these.

It is noted, that in this document the word 'comprising' does not exclude the presence of other elements or steps than those listed and the word 'a' or 'an' preceding an element does not exclude the presence of a plurality of such elements, that any reference signs do not limit the scope of the claims, that the invention may be implemented by means of both hardware and software, and that several 'means' or 'units' may be represented by the same item of hardware or software, and a processor may fulfill the function of one or more units, possibly in cooperation with hardware elements. Further, the invention is not limited to the embodiments, and the invention lies in each and every novel feature or combination of features described above or recited in mutually different dependent claims.

## Claims

1. Docking system comprising at least two hosts (100), multiple peripherals (110,111,112) coupled to the hosts and a dockee (120),
each of the host (100) arranged for wireless docking with the dockee (120) and comprising a host processor (101)
the system arranged for
- transmitting peripheral messages, each peripheral message comprising peripheral data indicative of the availability of services of at least one peripheral,
- docking with the dockee (120),
- receiving a selection message indicative of a selected peripheral, and
- providing access to the selected peripheral for the dockee (100),
the dockee (100) being a head wearable device arranged for wireless docking , and
the head wearable device comprising
- a camera (123) for capturing an image of an operating environment comprising the peripherals,
and
- a dockee processor (122) arranged for
- receiving the peripheral messages,
- processing the image for identifying the peripherals,
- detecting, via the head wearable device, a focus position in the operating environment based on a viewing direction of a wearer,
- selecting a peripheral out of the identified peripherals using the focus position,
- determining a selected host (100) by determining the host (100) that provides access to the selected peripheral in dependence on the received peripheral messages, and
- docking to the selected host (100),
- sending a selection message indicative of the selected peripheral, and
- accessing the selected peripheral and using the services of the selected peripheral.

2. Docking system as claimed in claim 1, wherein
- at least one peripheral and/or the host processor (101) is arranged for providing an active visual marker displayed on a display of the peripheral, and
- the dockee processor (122) is arranged for identifying the peripheral by detecting the visual marker in the image.

3. Head wearable device (120) for use in the system as claimed in claim 1,
the head wearable device (120) comprising
- a camera (123) for capturing an image of an operating environment comprising the peripherals,
- a dockee processor (122) arranged for
- receiving the peripheral messages,
- processing the image for identifying the peripherals,
- detecting, via the head wearable device (120), a focus position in the operating environment based on a viewing direction of a wearer,
- selecting a peripheral out of the identified peripherals based on the focus position,
- determining a selected host (100) by determining the host (100) that provides access to the selected peripheral in dependence on the received peripheral messages, and
- docking to the selected host (100),
- sending a selection message indicative of the selected peripheral, and
- accessing the selected peripheral and using the services of the selected peripheral.

4. Head wearable device (120) as claimed in claim 3, wherein
the head wearable device (120) comprises a display unit for displaying an overlay over the operating environment as perceived by the wearer via the head wearable device (120), and the dockee processor(122) is arranged for generating the overlay and therein visually marking at least one of the peripherals.

5. Head wearable device (120) as claimed in claim 4, wherein
the dockee processor (122) is arranged for said marking by either
- visually prioritizing the peripherals based on distance of the peripherals to the wearer or;
- visually prioritizing the peripherals based on session information of a previous session of the dockee using the peripherals; or
- visually indicating a peripheral that is available but not visible in the operating environment as perceived by the wearer.

6. Head wearable device (120) as claimed in any one of the claims 3-5, wherein the dockee processor (122) is arranged for
- detecting the focus position via the camera by taking a center position in the image as indicative of the viewing direction relative to the operating environment, the focus position corresponding to a center position in a field of view of the wearer looking straight ahead, and
- selecting the peripheral closest to the focus position.

7. Head wearable device (120) as claimed in claim 6, wherein the dockee processor (122) is arranged for
- detecting a gaze direction by detecting an actual orientation of an eye of the wearer and determining an offset of the actual orientation from the centered orientation, and shifting the focus position in dependence of the offset.

8. Head wearable device (120) as claimed in claim 7, wherein the dockee processor (122) is arranged for detecting a viewing distance from the eye of the wearer to the peripherals, and shifting said focus position in dependence of the viewing distance.

9. Head wearable device (120) as claimed in any of the claims 3-8, wherein the dockee processor (122) is arranged for identifying the peripheral in the operating environment by referring to a preconfigured setup, the preconfigured setup defining positions of the multiple peripherals in the operating environment.

10. Head wearable device (120) as claimed in any of the claims 3-8, wherein the dockee processor (122) is arranged for identifying the peripheral in the operating environment by recognizing the peripheral based on visual properties of the peripheral.

11. Head wearable device (120) as claimed in any of the claims 3-8 or 10, wherein the dockee processor (122) is arranged for identifying the peripheral by detecting a visual marker in the image.

12. Head wearable device (120) as claimed in claim 11, wherein the visual marker is
- a QR code or barcode;
- a label having a graphical symbol and/or text;
- an active visual marker displayed on a display of the peripheral.

13. Dockee method of docking for use in a head wearable device as dockee in the system as claimed in claim 1, the method comprising
- receiving the peripheral messages,
- processing the image for identifying the peripherals,
- detecting, via the head wearable device, a focus position in the operating environment based on a viewing direction of a wearer,
- selecting a peripheral out of the identified peripherals based on the focus position,
- determining a selected host by determining the host that provides access to the selected peripheral in dependence on the received peripheral messages, and
- docking to the selected host,
- sending a selection message indicative of the selected peripheral, and
- accessing the selected peripheral and using the services of the selected peripheral.

14. Host method of docking for use in a host in the system as claimed in claim 2, the host (100) arranged for wireless docking with a dockee, and for providing access to at least one of the peripherals for the dockee,
the method comprising
- transmitting peripheral messages, each peripheral message comprising peripheral data indicative of the availability of services of at least one peripheral,
- providing an active visual marker displayed on a display of the peripheral,
- docking a head wearable device as the dockee,
- receiving a selection message indicative of the selected peripheral, and
- providing access to the selected peripheral for the dockee.

15. Computer program for docking between a host and a dockee, comprising a program operative to cause a processor to perform the method as claimed in claim 13 or 14.

## Patentansprüche

1. Andocksystem umfassend mindestens zwei Hosts (100), mehrere Peripheriegeräte (110, 111, 112), die mit den Hosts gekoppelt sind, und eine andockbare Einheit (120),
wobei jeder der Hosts (100) dafür eingerichtet ist, die andockbare Einheit (120) anzudocken und einen Hostprozessor (101) umfasst,
wobei das System eingerichtet zum
- Übertragen von Peripheriegerätnachrichten, wobei jede Peripheriegerätnachricht Peripheriegerätdaten umfass, die die Verfügbarkeit von Diensten von mindestens einem Peripheriegerät angeben,
- Andocken der andockbaren Einheit (120),
- Empfangen einer Auswahlnachricht, die ein ausgewähltes Peripheriegerät angibt, und
- Bereitstellen von Zugang zu dem ausgewählten Peripheriegerät für die andockbare Einheit (100),
wobei die andockbare Einheit (100) eine am Kopf tragbare Vorrichtung ist, die zum drahtlosen Andocken eingerichtet ist, und wobei die am Kopf tragbare Vorrichtung Folgendes umfasst:
- eine Kamera (123) zum Erfassen eines Bilds einer Betriebsumgebung umfassend die Peripheriegeräte,
und
- einen Prozessor (122) der andockbaren Einheit, der eingerichtet ist zum
- Empfangen der Peripheriegerätnachrichten,
- Verarbeiten des Bilds zum Identifizieren der Peripheriegeräte,
- Detektieren, über die am Kopf tragbare Vorrichtung, einer Fokusposition in der Betriebsumgebung basierend auf einer Betrachtungsrichtung des Trägers,
- Auswählen eines Peripheriegeräts aus den identifizierten Peripheriegeräten unter Verwendung der Fokusposition,
- Ermitteln eines ausgewählten Hosts (100) durch Ermitteln des Hosts (100), der Zugang zu dem ausgewählten Peripheriegerät bereitstellt, in Abhängigkeit von den empfangenen Peripheriegerätnachrichten, und
- Andocken an den ausgewählten Host (100),
- Senden einer Auswahlnachricht, die das ausgewählte Peripheriegerät angibt, und
- Zugreifen auf das ausgewählte Peripheriegerät und Nutzen der Dienste des ausgewählten Peripheriegeräts.

2. Andocksystem nach Anspruch 1, wobei
- mindestens ein Peripheriegerät und/oder der Hostprozessor (101) dafür eingerichtet ist, einen aktiven visuellen Marker bereitzustellen, der auf einer Anzeige des Peripheriegeräts angezeigt wird, und
- der Prozessor (122) der andockbaren Einheit dafür eingerichtet ist, das Peripheriegerät durch Detektieren des visuellen Markers in dem Bild zu identifizieren.

3. Am Kopf tragbare Vorrichtung (120) zur Verwendung in dem System nach Anspruch 1, wobei die am Kopf tragbare Vorrichtung (120) Folgendes umfasst:
- eine Kamera (123) zum Erfassen eines Bilds einer Betriebsumgebung umfassend die Peripheriegeräte,
- einen Prozessor (122) der andockbaren Einheit, der eingerichtet ist zum
- Empfangen der Peripheriegerätnachrichten,
- Verarbeiten des Bilds zum Identifizieren der Peripheriegeräte,
- Detektieren, über die am Kopf tragbare Vorrichtung (120), einer Fokusposition in der Betriebsumgebung basierend auf einer Betrachtungsrichtung des Trägers,
- Auswählen eines Peripheriegeräts aus den identifizierten Peripheriegeräten basierend auf der Fokusposition,
- Ermitteln eines ausgewählten Hosts (100) durch Ermitteln des Hosts (100), der Zugang zu dem ausgewählten Peripheriegerät bereitstellt, in Abhängigkeit von den empfangenen Peripheriegerätnachrichten, und
- Andocken an den ausgewählten Host (100),
- Senden einer Auswahlnachricht, die das ausgewählte Peripheriegerät angibt, und
- Zugreifen auf das ausgewählte Peripheriegerät und Nutzen der Dienste des ausgewählten Peripheriegeräts.

4. Am Kopf tragbare Vorrichtung (120) nach Anspruch 3, wobei die am Kopf tragbare Vorrichtung (120) eine Anzeigeeinheit zum Anzeigen einer Überlagerung über der Betriebsumgebung, wie sie durch den Träger über die am Kopf tragbare Vorrichtung (120) wahrgenommen wird, umfasst und wobei der Prozessor (122) der andockbaren Einheit dafür eingerichtet ist, die Überlagerung zu erzeugen und darin mindestens eines der Peripheriegeräte visuell zu markieren.

5. Am Kopf tragbare Vorrichtung (120) nach Anspruch 4, wobei der Prozessor (122) der andockbaren Einheit dafür eingerichtet ist, das genannte Markieren vorzunehmen durch entweder
- visuelles Priorisieren der Peripheriegeräte basierend auf dem Abstand der Peripheriegeräte zum Träger; oder
- visuelles Priorisieren der Peripheriegeräte basierend auf Sitzungsinformationen einer vorhergehenden Sitzung der andockbaren Einheit unter Verwendung der Peripheriegeräte; oder
- visuelles Angeben eines Peripheriegeräts, das verfügbar ist, aber in der Betriebsumgebung, wie sie durch den Träger wahrgenommen wird, nicht sichtbar ist.

6. Am Kopf tragbare Vorrichtung (120) nach einem der Ansprüche 3 bis 5, wobei der Prozessor (122) der andockbaren Einheit eingerichtet ist zum
- Detektieren der Fokusposition über die Kamera durch Erfassen einer Mittenposition in dem Bild als die Betrachtungsrichtung in Bezug auf die Betriebsumgebung angebend, wobei die Fokusposition einer Mittenposition in einem Sichtfeld des geradeaus blickenden Trägers entspricht, und
- Auswählen des Peripheriegeräts, das der Fokusposition am nächsten ist.

7. Am Kopf tragbare Vorrichtung (120) nach Anspruch 6, wobei der Prozessor (122) der andockbaren Einheit eingerichtet ist zum
- Detektieren einer Blickrichtung durch Detektieren einer tatsächlichen Ausrichtung eines Auges des Trägers und Ermitteln eines Versatzes der tatsächlichen Ausrichtung von der zentrierten Ausrichtung, und Verschieben der Fokusposition in Abhängigkeit von dem Versatz.

8. Am Kopf tragbare Vorrichtung (120) nach Anspruch 7, wobei der Prozessor (122) der andockbaren Einheit eingerichtet ist zum Detektieren eines Betrachtungsabstands vom Auge des Trägers zu den Peripheriegeräten und zum Verschieben der genannten Fokusposition in Abhängigkeit von dem Betrachtungsabstand.

9. Am Kopf tragbare Vorrichtung (120) nach einem der Ansprüche 3 bis 8, wobei der Prozessor (122) der andockbaren Einheit dafür eingerichtet ist, das Peripheriegerät in der Betriebsumgebung zu identifizieren, indem er auf eine vorkonfigurierte Einrichtung Bezug nimmt, wobei die vorkonfigurierte Einrichtung Positionen der mehreren Peripheriegeräte in der Betriebsumgebung definiert.

10. Am Kopf tragbare Vorrichtung (120) nach einem der Ansprüche 3 bis 8, wobei der Prozessor (122) der andockbaren Einheit dafür eingerichtet ist, das Peripheriegerät in der Betriebsumgebung zu identifizieren, indem er das Peripheriegerät basierend auf visuellen Eigenschaften des Peripheriegeräts erkennt.

11. Am Kopf tragbare Vorrichtung (120) nach einem der Ansprüche 3 bis 8 oder 10, wobei der Prozessor (122) der andockbaren Einheit dafür eingerichtet ist, das Peripheriegerät zu identifizieren, indem er einen visuellen Marker in dem Bild detektiert.

12. Am Kopf tragbare Vorrichtung (120) nach Anspruch 11, wobei der visuelle Marker Folgendes ist:
- ein QR-Code oder Strichcode;
- ein Etikett mit einem grafischen Symbol und/oder Text;
- ein aktiver visueller Marker, der auf einer Anzeige des Peripheriegeräts angezeigt wird.

13. Andockverfahren der andockbaren Einheit zur Verwendung in einer am Kopf tragbaren Vorrichtung als andockbare Einheit in dem System nach Anspruch 1, wobei das Verfahren Folgendes umfasst:
- Empfangen von Peripheriegerätnachrichten,
- Verarbeiten des Bilds zum Identifizieren der Peripheriegeräte,
- Detektieren, über die am Kopf tragbare Vorrichtung, einer Fokusposition in der Betriebsumgebung basierend auf einer Betrachtungsrichtung eines Trägers,
- Auswählen eines Peripheriegeräts aus den identifizierten Peripheriegeräten unter Verwendung der Fokusposition,
- Ermitteln eines ausgewählten Hosts durch Ermitteln des Hosts, der Zugang zu dem ausgewählten Peripheriegerät bereitstellt, in Abhängigkeit von den empfangenen Peripheriegerätnachrichten, und
- Andocken an den ausgewählten Host,
- Senden einer Auswahlnachricht, die das ausgewählte Peripheriegerät angibt, und
- Zugreifen auf das ausgewählte Peripheriegerät und Nutzen der Dienste des ausgewählten Peripheriegeräts.

14. Andockverfahren des Hosts zur Verwendung in einem Host in dem System nach Anspruch 2, wobei der Host (100) zum drahtlosen Andocken einer andockbaren Einheit und zum Bereitstellen von Zugang zu mindestens einem der Peripheriegeräte für die andockbare Einheit eingerichtet ist,
wobei das Verfahren Folgendes umfasst:
- Übertragen von Peripheriegerätnachrichten, wobei jede Peripheriegerätnachricht Peripheriegerätdaten umfasst, die die Verfügbarkeit von Diensten von mindestens einem Peripheriegerät angeben,
- Bereitstellen eines aktiven visuellen Markers, der auf einer Anzeige des Peripheriegeräts angezeigt wird,
- Andocken einer am Kopf tragbaren Vorrichtung als andockbare Einheit,
- Empfangen einer Auswahlnachricht, die ein ausgewähltes Peripheriegerät angibt, und
- Bereitstellen von Zugang zu dem ausgewählten Peripheriegerät für die andockbare Einheit.

15. Computerprogramm zum Andocken zwischen einem Host und einer andockbaren Einheit, umfassend ein Programm, das betriebsfähig ist, um einen Prozessor zu veranlassen, das Verfahren nach Anspruch 13 oder 14 durchzuführen.

## Revendications

1. Système d'amarrage comprenant au moins deux hôtes (100), de multiples périphériques (110, 111, 112) couplé aux hôtes et à un dock EE (120),
chacun des hôtes (100) étant conçu pour un amarrage sans fil avec le dock EE (120) et comprenant un processeur hôte (101)
le système étant conçu pour
transmettre des messages de périphérique, chaque message de périphérique comprenant des données de périphérique indiquant la disponibilité de services d'au moins un périphérique,
- amarrer le dock EE (120),
- recevoir un message de sélection indiquant un périphérique sélectionné, et
- fournir un accès au périphérique sélectionné pour le dock EE (100),
le dock EE (100) étant un dispositif portable sur la tête conçu pour un amarrage sans fil, et
le dispositif portable sur la tête comprenant
- un dispositif de prise de vue (123) pour capturer une image d'un environnement d'exploitation comprenant les périphériques, et
- un processeur de dock EE (122) conçu pour
- recevoir les messages de périphérique,
- traiter l'image pour identifier les périphériques,
- détecter, via le dispositif portable sur la tête, une position de focalisation dans l'environnement d'exploitation sur la base d'une direction de visualisation d'un porteur,
- sélectionner un périphérique parmi les périphériques identifiés en utilisant la position de focalisation,
- déterminer un hôte sélectionné (100) en déterminant l'hôte (100) qui fournit un accès au périphérique sélectionné en fonction des messages de périphérique reçus, et
- amarrer l'hôte sélectionné (100),
- envoyer un message de sélection indiquant le périphérique sélectionné, et
- accéder au périphérique sélectionné et utiliser les services du périphérique sélectionné.

2. Système d'amarrage selon la revendication 1, dans lequel
- au moins un périphérique et/ou le processeur hôte (101) est conçu pour fournir un marqueur visuel affiché sur un affichage du périphérique, et
- le processeur de dock EE (122) est conçu pour identifier le périphérique en détectant le marqueur visuel dans l'image.

3. Dispositif portable sur la tête (120) destiné à être utilisé dans le système selon la revendication 1, le dispositif portable sur la tête (120) comprenant
- un dispositif de prise de vue (123) pour capturer une image d'un environnement d'exploitation comprenant les périphériques,
- un processeur de dock EE (122) conçu pour
- recevoir les messages de périphérique,
- traiter l'image pour identifier les périphériques,
- détecter, via le dispositif portable sur la tête (120), une position de focalisation dans l'environnement d'exploitation sur la base d'une direction de visualisation d'un porteur,
- sélectionner un périphérique parmi les périphériques identifiés en utilisant la position de focalisation,
- déterminer un hôte sélectionné (100) en déterminant l'hôte (100) qui fournit un accès au périphérique sélectionné en fonction des messages de périphérique reçus, et
- amarrer l'hôte sélectionné (100),
- envoyer un message de sélection indiquant le périphérique sélectionné, et
- accéder au périphérique sélectionné et utiliser les services du périphérique sélectionné.

4. Dispositif portable sur la tête (120) selon la revendication 3, dans lequel le dispositif portable sur la tête (120) comprend une unité d'affichage pour afficher une superposition sur l'environnement d'exploitation tel que perçu par le porteur via le dispositif portable sur la tête (120), et un processeur de dock EE (122) est conçu pour générer la superposition et marquer visuellement à l'intérieur au moins un des périphériques.

5. Dispositif portable sur la tête (120) selon la revendication 4, dans lequel le processeur de dock EE (122) est conçu pour ledit marquage en
- priorisant visuellement les périphériques en fonction d'une distance entre les périphériques et le porteur ou ;
- priorisant visuellement les périphériques en fonction d'informations de session d'une session précédente du dock EE utilisant les périphériques ; ou
- indiquant visuellement un périphérique disponible mais non visible dans l'environnement d'exploitation tel que perçu par le porteur.

6. Dispositif portable sur la tête (120) selon l'une quelconque des revendications 3 à 5, dans lequel le processeur de dock EE (122) est conçu pour
- détecter la position de focalisation via le dispositif de prise de vue en prenant une position centrale dans l'image comme indiquant la direction de visualisation par rapport à l'environnement d'exploitation, la position de focalisation correspondant à une position centrale dans un champ de vision du porteur regardant droit devant lui, et
- sélectionner le périphérique le plus proche de la position de mise au point.

7. Dispositif portable sur la tête (120) selon la revendication 6, dans lequel le processeur de dock EE (122) est conçu pour
- détecter une direction de regard en détectant une orientation réelle de l'oeil du porteur et déterminer un décalage de l'orientation réelle par rapport à l'orientation centrée, et décaler la position de focalisation en fonction du décalage.

8. Dispositif portable sur la tête (120) selon la revendication 7, dans lequel le processeur de dock EE (122) est conçu pour détecter une distance de visualisation depuis l'oeil du porteur jusqu'aux périphériques, et décaler ladite position de focalisation en fonction de la distance visualisation.

9. Dispositif portable sur la tête (120) selon l'une quelconque des revendications 3 à 8, dans lequel le processeur de dock EE (122) est conçu pour identifier le périphérique dans l'environnement d'exploitation en se référant à une configuration préconfigurée, la configuration préconfigurée définissant des positions des multiples périphériques dans l'environnement d'exploitation.

10. Dispositif portable sur la tête (120) selon l'une quelconque des revendications 3 à 8, dans lequel le processeur de dock EE (122) est conçu pour identifier le périphérique dans l'environnement d'exploitation en reconnaissant le périphérique sur la base de propriétés visuelles du périphérique.

11. Dispositif portable sur la tête (120) selon l'une quelconque des revendications 3 à 8 ou 10, dans lequel le processeur de dock EE (122) est conçu pour identifier le périphérique en détectant un marqueur visuel dans l'image.

12. Dispositif portable sur la tête (120) selon la revendication 11, dans lequel le marqueur visuel est
- un code QR ou un code-barres;
- une étiquette comportant un symbole graphique et/ou un texte;
- un marqueur visuel actif affiché sur un affichage du périphérique.

13. Procédé d'amarrage de dock EE pour une utilisation dans un dispositif portable sur la tête en tant que dock EE dans le système selon la revendication 1, le procédé comprenant de
- recevoir les messages de périphérique,
- traiter l'image pour identifier les périphériques,
- détecter, via le dispositif portable sur la tête, une position de focalisation dans l'environnement d'exploitation sur la base d'une direction de visualisation d'un porteur,
- sélectionner un périphérique parmi les périphériques identifiés sur la base de la position de focalisation,
- déterminer un hôte sélectionné en déterminant l'hôte qui fournit un accès au périphérique sélectionné en fonction des messages de périphérique reçus, et
- amarrer l'hôte sélectionné,
- envoyer un message de sélection indiquant le périphérique sélectionné, et
- accéder au périphérique sélectionné et utiliser les services du périphérique sélectionné.

14. Procédé d'amarrage d'hôte destiné à être utilisé dans un hôte dans le système selon la revendication 2, l'hôte (100) étant conçu pour un amarrage sans fil avec un dock EE, et pour fournir un accès à au moins un des périphériques pour le dock EE,
le procédé comprenant de
- transmettre des messages de périphérique, chaque message de périphérique comprenant des données de périphérique indiquant la disponibilité de services d'au moins un périphérique,
- fournir un marqueur visuel actif affiché sur un affichage du périphérique,
- amarrer un appareil portable sur la tête en tant que dock EE,
- recevoir un message de sélection indiquant le périphérique sélectionné, et
- fournir un accès au périphérique sélectionné pour le dock EE.

15. Programme informatique d'amarrage entre un hôte et un dock EE, comprenant un programme opérationnel pour amener un processeur à effectuer le procédé selon la revendication 13 ou 14.
